Europäisches Patentamt

European Patent Office

Office européen des brevets

(11) Publication number: **0 116 589**
**B1**

# EUROPEAN PATENT SPECIFICATION

(45) Date of publication of patent specification: **11.06.86**

(21) Application number: **83902646.5**

(22) Date of filing: **18.08.83**

(86) International application number:
**PCT/HU83/00043**

(87) International publication number:
**WO 84/00831 01.03.84 Gazette 84/06**

(51) Int. Cl.⁴: **G 06 F 3/00,** G 06 K 15/22,
G 03 G 15/00

(54) **DISPLAY AND HARD-COPY DEVICE OPERATING IN CONJUNCTION WITH COMPUTERS OR OTHER INFORMATION SOURCES.**

(30) Priority: **19.08.82 HU 270182**

(43) Date of publication of application:
**29.08.84 Bulletin 84/35**

(45) Publication of the grant of the patent:
**11.06.86 Bulletin 86/24**

(84) Designated Contracting States:
**AT BE CH DE FR GB LI LU NL SE**

(56) References cited:
**DE-A-2 623 468**
**FR-A-2 166 842**
**US-A-4 103 297**
**US-A-4 367 946**

(73) Proprietor: **DAVID, Gábor**
**Számado u. 6**
**H-1118 Budapest (HU)**
(73) Proprietor: **KOVACS, Tamás**
**Csévi ut 16**
**H-1025 Budapest (HU)**
(73) Proprietor: **SZATMARI, Ferenc**
**Attila u. 108**
**H-1191 Budapest (HU)**

(72) Inventor: **DAVID, Gábor**
**Számado u. 6**
**H-1118 Budapest (HU)**
Inventor: **KOVACS, Tamás**
**Csévi ut 16**
**H-1025 Budapest (HU)**
Inventor: **SZATMARI, Ferenc**
**Attila u. 108**
**H-1191 Budapest (HU)**

(74) Representative: **Schwabe, Hans-Georg, Dipl.-Ing. et al**
**Patentanwälte Schwabe, Sandmair, Marx**
**Stuntzstrasse 16**
**D-8000 München 80 (DE)**

Courier Press, Leamington Spa, England.

## Description

### Field of Invention

The subject matter of the present invention is a display and hard-copy device operating in conjunction with a computer or other source of information, comprising means to display (the total or partial) visual information to be recorded utilizing its intrinsic light or an external source of light, a light-shutter controlling the time of exposure, or electronic means performing the same function, an information media for recording the information by means of photochemical or photoelectric procedure, mechanically operated means to develop the image by applying chemical or physical processes, an illumination sensor, control electronics, trigger electronics, and interface electronics processing the data received from said source of information. The device provided by the present invention can be preferably used to display, record or reproduce (copy) digital or analogic information resulted by computations, measurements or other processes providing information.

In the following the term "light-shutter" will be simply used for "light-shutter or electronics".

### Background of the Invention

The partial and final results provided by the information processing systems are required to be displayed and recorded. Recently the systems widely used realize these two functions independently. A large number of different devices are widely used for displaying and recording analog and digital informations. An example for the analog display device is the screen of an oscilloscope generally used in measuring processes, in this case, it may be the display of an analogic computer, too, or the screen of a videotechnical device (a TV screen). An analog recorder is for example an x—y recorder connected to said devices, a photographic apparatus making a picture of the screen, or a plotter representing a special class of the x—y recorders. The picture appearing on the screen of the TV unit mentioned above or a signal displayed by the screen of an oscilloscope is presently recorded by photographic processes by means of an optical system facing the said screen.

The display and recorder of the digital equipments may be classified in several different ways. On the one hand, the display devices may be classified on the basis of the technology applied, i.e. the physical effect utilized to attain the visual perceptibility. According to this classification, active and passive display elements may be distinguished. Active display elements are e.g. the incandescent (hot filament) systems, the plasma display, the light-emitting diode, the vacuum fluorescent devices, etc. Passive display devices are the presently used nematic and dichroic liquid-crystal display elements, the different mechanical display units reflecting only the light, and so on. Apart from the principle of operation the display devices may be classified according to their structure, too. So there are dot, matrix, segment, line, etc. display units. The recording devices of the digital technics also exhibit a wide variety. The choice extends from the electronically controlled typewriters, performing the recording by means of fixed optionally changeable code system, through different printing systems to sophisticated photoelectric devices. Both the display and recording devices may be considered as peripheral equipments of computer systems. In the recent years a rapid fall in the prices of the computer devices can be observed, which has not been followed by the drop in the price of the display and recording devices considered as main peripheral units of said computer systems.

One of the objects of our invention is to eliminate this disproportionateness. At the same time it is desirable to have a possibility for recording the displayed images intended to be recorded without any intermediate device.

A further object of our invention is to facilitate the displaying, editing, recording and duplicating of the visual information input by electronic (and not optical) means, integrated in a single process and in a single device, providing interface to different electronic information sources.

### Disclosure of the Invention

In order to accomplish the objects above, the display and recorder of the image to be recorded is realized in a single integrated unit with the present invention. To attain this object the matter of the present invention is a single integrated unit comprising a display device mounted in front of the media, a light-shutter and an illumination sensor, wherein all the components but the media and the image processing (developing) unit are included in a "solid state" or compact unit.

Solid state means a device capable to change one of its physical characteristics, e.g. light transmission or emission without any mechanical displacement, like a liquid-crystal or vacuum-fluorescent layer, etc.

The aim of the present invention considering the exposure may be attained by several different embodiments.

Provided the displayed image is produced by reflection, the change in the recording media is effected by the transmitted light.

Provided the displayed image is produced by emission the change in the recording media (in one side) is effected by the emitted light, providing at the same time the image to be recorded visible on the other side.

The intention of the present invention considering the recording of the image can also be attained by several different forms or embodiments.

When the image to be recorded extends to the total surface area (it is not resolved into lines or columns) then the image is processed following the exposition by means of an image processing mechanism. When the image to be recorded is produced by resolving the total image into lines or columns (or other picture elements as characters or segments), then the resolution of the image, the exposure and the process of the image (developing) may be performed simultaneously in a continuous operating sequence, utilizing the mechanical movement of the image processing mechanism.

Advantages of the present invention are the increased reliability and the elaboration of an apparatus capable to visually display any digital, analogic or graphic information received in form of properly coded electronic signals and simultaneously make one or more hard-copy of it by means of a photochemical or photoelectric procedure. The following advantages can be obtained.

A basic advantage of the apparatus is that not only the reliability is increased by substituting most of the mechanical parts used heretofore with optoelectronic solid state devices and possibly high scale integration, but by means of decreasing the length of the light-path through the recording section practically a contact printing process is accomplished, and the large sized and expensive optical systems can be saved.

A preferred realization is wherein all parts except the developing unit are integrated into a single piece or when in addition to the restricted integrated unit specified before a separated integrated unit is comprised of the control-, trigger- and interface electronics, facilitating thereby the integration of the electronic components into other electronic systems, when required.

According to a potential realization of the apparatus provided by the present invention the integrated unit is comprised of the superimposed layers of a display upper mask, a display upper carrier, an electrooptically active display substance, preferably a liquid crystal or light-emitting substance, a display lower carrier, a display lower mask, a coupling element, a light-shutter upper mask, a light-shutter upper carrier, an electrooptically active light shut off material, preferably liquid crystal, a light-shutter lower carrier, a light-shutter lower mask, and an illumination sensor partially or totally covering the light-path.

Said display lower carrier, light-shutter upper carrier and the interposed coupling element can be preferably substituted with a single common carrier, and the display lower mask as well as the light-shutter upper mask can be layered onto the upper and lower surface of this common carrier, respectively.

Another possible embodiment of the apparatus according to the present invention is characterized by the following features:

within said integrated unit the display and light shut off functions are performed by a common display/light-shutter layer;

the integrated unit is also provided with red, blue and green filter layers positioned perpendicularly to the direction of the movement of the light-sensitive media exposed line by line (successively in the three colours) and stepped intermittently, but parallel to each other in the same plane;

the illumination sensor is also divided into three sections provided with red, blue and green filters, respectively;

finally this construction by separating the three primary colours makes the apparatus capable to record colour information, too.

A further form of the apparatus provided by the present invention can be realized by loading a program into the memory of the interfaced computer to switch the display on only for the exposure time, such the light-shutter may be saved.

A further embodiment of the apparatus according to the present invention can be attained by combining it with a computer, applied for the code conversion of the signals received from the display unit of an external device.

Short Description of the Drawings

Several forms of the invention will be described below in detail, referring to the following Figures, where

Fig. 1 is a perspective scheme of the apparatus provided by the invention illustrating every component;

Fig. 2 is a part of the device illustrated partly in sectional view;

Fig. 3 is a similar sectional view illustrating the separate layers;

Fig. 4 is the same section simplified; and

Fig. 5 is the top and side view of the integrated unit and the light-sensitive media of a colour copy-device.

Description of Preferred Embodiments

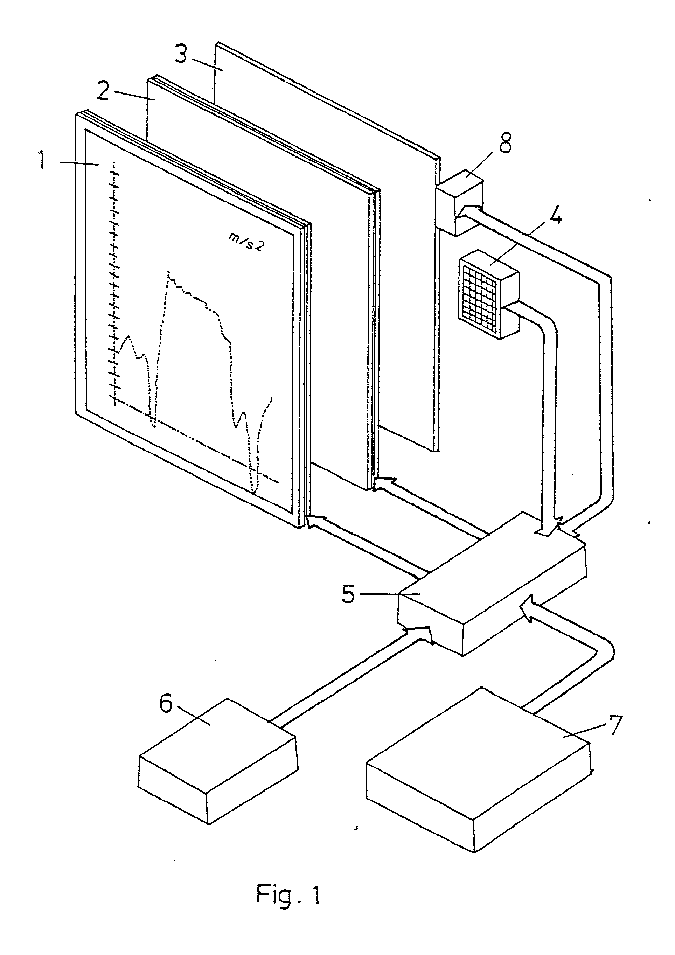

The operating principle of the apparatus corresponding to the present invention is described in the followings, referring to Fig. 1.

The interface electronics 7 converts the different signals received from the source of information (e.g. a computer or different peripheral devices) to a uniform signal required by the apparatus of the present invention to further processing. The current image corresponding to the signal transmitted by the interface electronics is applied to the display 1 by the control electronics 5, in accordance with the control system determinated by the current embodiment. The same time the control electronics 5 controls the light-shutter 2 in such a manner that the media 3, or in this case the photoresistive layer producing an electrostatic image is not exposed to any illumination. The structure of the display device (the operating principle) is that the image to be displayed is produced by some kind of physical change in the substance of the display device, related to the change of light emission, refraction, polarization or absorption feature. At the moment the trigger electronics 6 generates a trigger pulse for the control electronics 5, the latter holds the image presented by the display stationary, and controls the light-shutter 2 to be permeable to the light received from an external light source or emitted by the display. The illumination sensor 4 located behind the light-shutter 2 detects or controls the quantity of light transmitted and the result is forwarded to the control electronics 5.

When the quantity of the light has reached the value required to activate the media 3, the control electronics 5 makes the light-shutter 2 impermeable to light and activates the mechanical developing unit 8 to begin the development of the media 3. In a preferred realization the media 3 is a so-called polaroid material which, after the exposure, provides a ready-made picture as a result of chemical processes initiated by a mechanical influence. Or, another preferred form of the invention operates so that the image to be recorded is transferred to the media by means of photoelectric (xerographic) procedure.

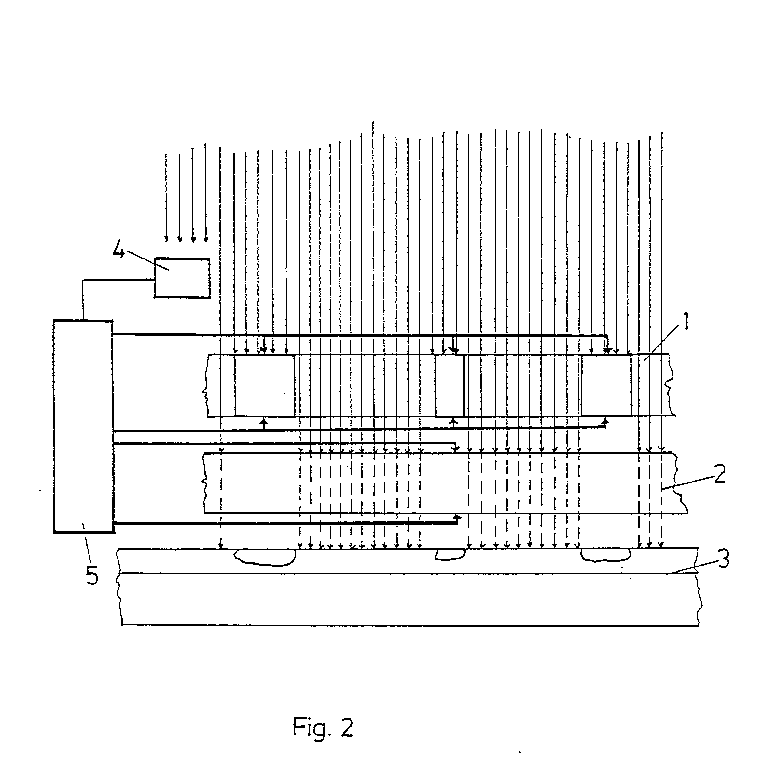

A detail of the apparatus is illustrated in Fig. 2. The difference with respect to the general arrangement is that the illumination sensor 4 is positioned in front of both the light shutter 2 and the display 1. It is obvious that this element only detects the transmitted light which may be measured before or behind the display 1 and before or behind the light-shutter 2, respectively. Certainly this statement does not relate to light-emitting displays. The figure illustrates the operation of the device in a sectional view. The transmitted light passes through certain sections of the display, while other sections (dark regions) shut the light off and provided the shutter 2 is controlled to transmit the light, then a negative or positive image of the picture displayed is produced on the media 3, depending on its characteristics. The correct exposure-time, e.g. the open period of the light-shutter 2 is provided by the control electronics 5 by means of the illumination sensor.

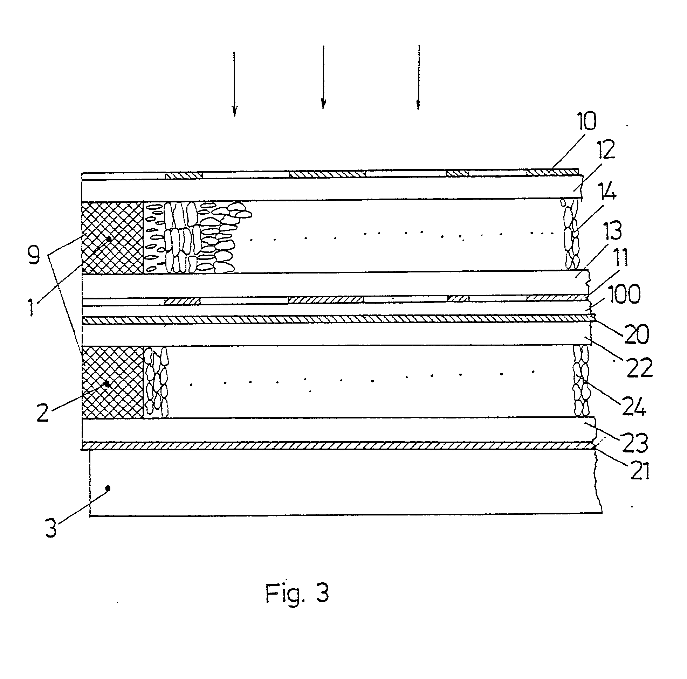

Fig. 3 illustrates a preferred realization with a liquid crystal display, commonly used recently. According to the figure, the display device is comprised of a display upper carrier 12, a display lower carrier 13, a display upper mask 10, a display lower mask 11, a liquid crystal 14 and a shut off material 9. The light-shutter 2 comprises a light-shutter upper carrier 22, a light-shutter lower carrier 23, a light-shutter upper mask 20, a light-shutter lower mask 21, and an active light-shutter substance 24. The mechanical and optical interconnection between the two subunits is provided by a coupling material 100. It can be seen in the figure, that both the display 1 and the light-shutter 2 are provided with masks applied to the lower and upper carriers, as well as optically active material between the carriers.

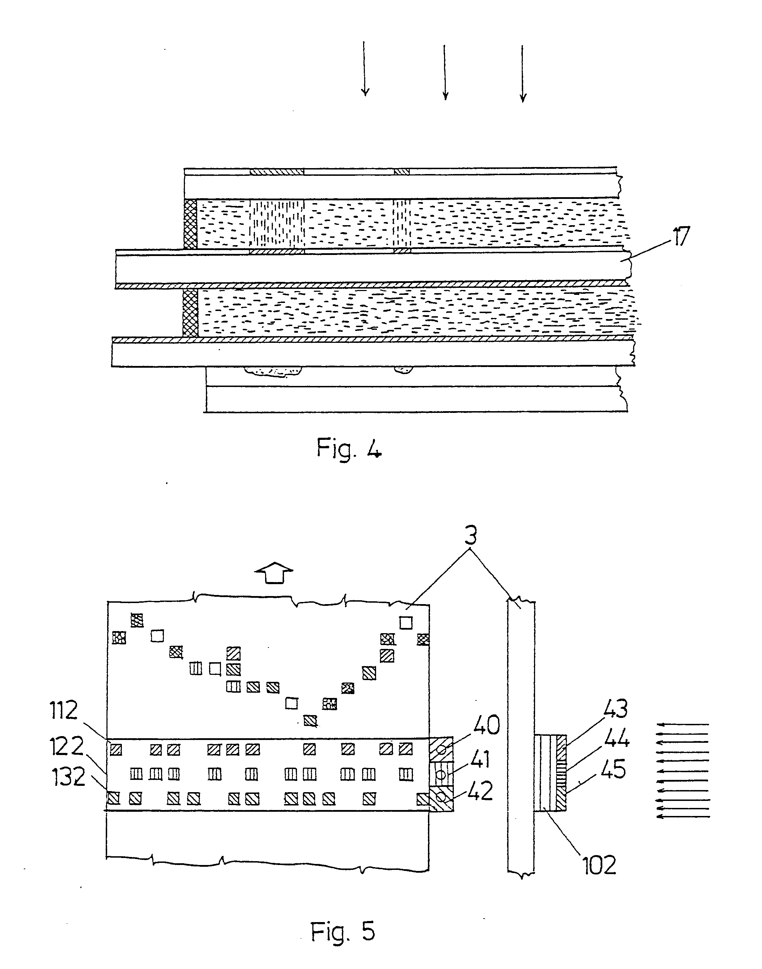

The embodiment illustrated in Fig. 4 does not require for the subunits separate lower and upper carriers. Here the lower carrier 13 and the light-shutter upper carrier 22 are common, their function is realized by a common carrier 17.

A realization different from those shown heretofore is illustrated in Fig. 5. The functions of the display 1 and the light-shutter 2 are combined in a display-shutter 102 such a way that its light transmittance is maintained only for a period required by the exposure time. This detail of the device is shown in top view and a sectional view in the figure. This kind of embodiment is suitable for producing colour hard-copy. The display shutter 102 is divided into three sections, a red display shutter 112, a blue display shutter 122 and a green display shutter 132. A red filter 43, a blue filter 44 and a green filter 45 are located between these subunits as required. The illumination sensor 4 is also divided into three sections, a red illumination sensor 40, a blue illumination sensor 41 and a green illumination sensor 42, positioned under the corresponding filters. The operating principle of this embodiment is as follows. The media 3, in this case some kind of photochemical material only, is moved intermittently in the direction indicated by the arrow. The media is exposed line by line, with a one-line shift for the different colours. The red display shutter 112, the blue display shutter 122 and the green display shutter 132 are held open for periods required by the intensity of the light transmitted by the red filter 43, the blue filter 44 and the green filter 45 as detected by the red illumination sensor 40, the blue illumination sensor 41 and the green illumination sensor 42. Following the simultaneous exposure of the three lines, the media 3 is stepped by a line spacing with the corresponding part of the mechanical developing unit 8, and the previous exposing process is repeated. Thereby the necessary ratio of the red, blue and green illumination is produced in the media to obtain a correct picture. This form of the invention may be preferably applied as a hard-copy device of equipments supported with a colour TV set as display unit.

The present invention provides the following advantages as compared to the devices known heretofore. Primarily, it is functionally a novelty, as it promotes a procedure to apply in the environment of computer systems, which has been utilized before only by indirect methods, if at all. Secondary the compact workmanship, i.e. integration of the display and recording device involves the significant reduction of price. The large scale integration significantly increases the reliability as well. A further advantage may be (when the media enables it) that the display is followed by the recorded picture in a very short time, this being a primary requirement in certain applications (medical, etc.). The possibility of producing colour hard-copy is also an important feature. Furthermore, the rate of energy per unit area of the recorded picture as compared to the known methods (printing, etc.) is low, thereby the device provided by the present invention can be preferably applied in portable instruments.

**Claims**

1. Display and hard-copy device operating in conjunction with a computer or other source of information, comprising a display (1) applied to display the total or partial visual information to be recorded utilizing its own intrinsic or external source of light, a light-shutter (2) controlling the time of exposure or electronic means performing the same function, an information media (3) for recording the information by means of a photochemical or photoelectric procedure, mechanically operated means (8) to develop the image by applying chemical or physical processes, an illumination sensor (4) or exposure controller, control electronics, trigger electronics, and interface electronics processing the data received from said source of information, characterized in that the display (1) located in the path of the light-beam falling on the media (3), the light-shutter (2) and the illumination sensor (4) form a single integrated unit, furthermore every component but the information media (3) and the picture developing unit (8) are solid-state devices, and the display of the image, the exposure and the developing process of the picture are all performed simultaneously in a continuous process by utilizing the mechanical movement of the developing mechanism.

2. An apparatus as claimed in Claim 1, characterized in that the said integrated unit also comprises the control electronics (5), the trigger electronics (6) and the interface electronics (7).

3. An apparatus as claimed in Claim 1, characterized in that said control electronics (5), trigger electronics (6) and interface electronics (7) are included in a separate unit.

4. An apparatus as claimed in Claim 1, characterized in that said integrated unit is comprised of the superimposed layers of the display upper mask (10), display upper carrier (12), electrooptically active display material (14), display lower carrier (13), display lower mask (11), coupling element (100), light-shutter upper mask (20), light-shutter upper carrier (22), electrooptically active light-shutter material (24), light-shutter lower carrier (23), light-shutter lower mask (21) and illumination sensor or controller (4) covering partially or totally the path of the light.

5. An apparatus as claimed in Claim 4, characterized in that the display material and the light-shutter material are composed of liquid crystal.

6. An apparatus as claimed in Claim 4, characterized in that the display material is composed of electroluminescent crystal and the light-shutter material is of liquid crystal.

7. An apparatus as claimed in Claim 4, characterized in that said display lower carrier, light-shutter upper carrier as well as the interposed coupling element are substituted by a single common carrier (17), and the display lower mask as well as the light-shutter upper mask are layered onto the upper and lower surface of this common carrier, respectively.

8. An apparatus as claimed in Claim 1, characterized in that a common display/light-shutter medium is included in said integrated unit performing the functions of both the display and the light-shutter;

said integrated unit is also provided with red filter (43), blue filter (44) and green filter (45) layers positioned perpendicularly to the direction of motion of the light sensitive media stepped and exposed line by line, and the said filters are parallel to each other in the same plane;

the illumination sensor is also divided into three sections (40, 41, 42) as red, blue and green filters, respectively;

thereby separating the three primary colours, the device is capable to record colour information, too.

9. An apparatus as claimed in Claim 1, characterized in that a program substituting the function of the light-shutter by switching on only the display for the time of exposure is loaded into the memory of the interfaced information source.

10. An apparatus as claimed in Claim 9, characterized in that it is integrated with a computer to perform code conversion on signals received from the display device of an external equipment to be received by the device of the present invention and to facilitate the recording and duplication of any information occurring in this computer, as required.

11. An apparatus as claimed in Claim 1, characterized in that said interface electronics (7) comprises proper circuitry whereby the device is able to record and duplicate automatically any selected image of a series appearing on said display device or on the screen of an associated commercial video display device.

## Patentansprüche

1. Anzeige- und Hartkopiervorrichtung, die mit Rechnern oder anderen Datenquellen zusammenarbeitet, mit einer Anzeige (1), die verwendet ist, um die gesamte oder einen Teil der visuellen Daten anzuzeigen, die mit Hilfe einer eigenen inneren oder einer externen Lichtquelle aufzuzeichnen sind, mit einem Lichtverschluß (2), welcher die Belichtungszeit steuert oder mit einer elektronischen Einrichtung, welche dieselbe Funktion ausführt, mit einem Informationsmedium (3) zum Aufzeichnen der Information mittels eines photochemischen oder photoelektrischen Verfahrens, mit mechanisch betätigten Einrichtungen (8), um das Bild mit Hilfe chemischer oder physikalischer Prozesse zu entwickeln, mit einem Beleuchtungsensor (4) oder einer Belichtungssteuereinrichtung, mit Steuerelektronik, mit Triggerelektronik und mit Kopplungsselektronik, welche die Daten verarbeiten, die von der Datenquelle empfangen worden sind, dadurch gekennzeichnet, daß die Anzeige (1), die in der Bahn des Lichtstrahls angeordnet ist, welcher auf das Medium (3) fällt, der Lichtverschluß (2) und der Beleuchtungssensor (4) eine einzige integrierte Einheit bilden, daß ferner jeder Bestandteil außer dem Informationsmedium (3) und der Bildentwicklungseinrichtung (8) Festkörpereinrichtungen sind, und daß die Anzeige des Bilds, die Belichtung und der Entwicklungsvorgang des Bildes alle gleichzeitig in einen kontinuierlichen Prozeß durchgeführt werden, indem die mechanische Bewegung des Entwicklungsmechanismus ausgenutzt wird.

2. Vorrichtung nach Anspruch 1, dadurch gekennzeichnet, daß die integrierte Einheit auch die Steuerelektronik (5), die Triggerelektronik (6) und die Kopplungselektronik (7) aufweist.

3. Vorrichtung nach Anspruch 1, dadurch gekennzeichnet, daß die Steuerelektronik (5), die Triggerelektronik (6) und die Kopplungselektronik (7) in einer gesonderten Einheit enthalten sind.

4. Vorrichtung nach Anspruch 1, dadurch gekennzeichnet, daß die integrierte Einheit aus den übereinander gelegten Lagen einer oberen Anzeigemaske (10), eines oberen Anzeigeträgers (12), elektrooptisch aktivem Anzeigematerial (14), eines unteren Anzeigeträgers (13), einer unteren Anzeigemaske (11), eines Kopplungselement (100), einer oberen Lichtverschluß-Maske (20), eines oberen Lichtverschlußträgers (22), elektrisch aktivem Lichtverschlußmaterial (24), eines unteren Lichtverschluß-Trägers (23) einer unteren Lichtverschlußmaske (21) und eines Beleuchtungssensors oder einer Steuereinheit (24) gebildet ist, welche teilweise oder ganz die Lichtbahn abdecken.

5. Vorrichtung nach Anspruch 4, dadurch gekennzeichnet, daß das Anzeigematerial und das Lichtverschlußmaterial aus Flüssigkristall zusammengesetzt sind.

6. Vorrichtung nach Anspruch 4, dadurch gekennzeichnet, daß das Anzeigematerial aus einem Elektroluminiszenzkristall gebildet ist, und daß das Lichtverschlußmaterial aus einem Flüssigkristall gebildet ist.

7. Vorrichtung nach Anspruch 4, dadurch gekennzeichnet, daß der untere Anzeigeträger, der obere Lichtverschluß-Träger sowie das dazwischen angeordnete Kopplungselement durch einen einzigen gemeinsamen Träger (17) ersetzt sind, und daß die untere Anzeigemaske sowie die obere Lichtverschlußmaske an der oberen und unteren Fläche dieses gemeinsamen Trägers als dünne Schicht aufgebracht sind.

8. Vorrichtung nach Anspruch 1, dadurch gekennzeichnet, daß ein gemeinsames Anzeige/-Lichtverschlußmedium in der integrierten Einheit enthalten ist, welche die Funktionen sowohl der Anzeige als auch des Lichtverschlusses durchführt;

daß die integrierte Einheit auch mit Rotfilter- (43), Blaufilter- (44) und Grünfilterschichten (45) versehen ist, welche senkrecht zu der Bewegungsrichtung der lichtempfindlichen Medien angeordnet sind, die abgesetzt, und Zeile für Zeile belichtet sind, und daß die Filter in derselben Ebene parallel zueinander sind;

der Beleuchtungsensor wie die Rot-, Blau- und Grünfilter ebenso in drei Abschnitte (40, 41, 42) unterteilt ist, um dadurch die drei Primärfarben zu trennen, so daß die Einrichtung auch Farbinformation aufzeichnen kann.

9. Vorrichtung nach Anspruch 1, dadurch gekennzeichnet, daß ein Programm, welches die Funktion des Lichtverschlusses ersetzt, indem für die Dauer der Belichtungszeit nur auf die Anzeige geschaltet wird, in einen Speicher einer angepaßten Informationsquelle geladen ist.

10. Vorrichtung nach Anspruch 9, dadurch gekennzeichnet, daß sie in einen Computer integriert ist, um eine Kodeumsetzung bei Signalen durchzuführen, welche von der Anzeigevorrichtung einer externen Einrichtung empfangen worden sind, um durch die Vorrichtung gemäß der Erfindung empfangen zu werden und um erforderlichenfalls das Aufzeichnen und Vervielfältigen irgendeiner Information, die in diesem Computer vorkommt, zu erleichtern.

11. Vorrichtung nach Anspruch 1, dadurch gekennzeichnet, daß die Kopplungselektronik (7) eine entsprechende Schaltung aufweist, aufgrund welcher die Einrichtung automatisch irgendein ausgewähltes Bild einer Reihe aufzeichnen und vervielfältigen kann, welche auf der Anzeigevorrichtung oder auf dem Bildschirm einer zugeordneten handelsüblichen Videoanzeigeeinrichtung erscheint.

**Revendications**

1. Dispositif de visualisation et de reproduction fonctionnant en liaison avec un ordinateur ou une autre source d'information, comprenant un écran (1) prévu pour visualiser la totalité ou une partie des informations visuelles à enregistrer en utilisant sa propre source lumineuse intrinsèque ou une source extérieure, un obturateur (2) commandant la durée d'exposition ou des moyens électroniques assurant la même fonction, un support d'information (3) pour enregistrer les informations par un processus photochimique ou photoélectrique, des moyens (8) actionnés mécaniquement pour développer l'image en appliquant des processus chimiques ou physiques, un photomètre (4) ou un contrôler d'exposition, une électronique de commande, une électronique de déclenchement, et une électronique d'interface traitant les données reçues de ladite source d'information, caractérisé en ce que l'écran (1) placé sur le trajet du faisceau lumineux arrivant sur le support (3), l'obturateur (2) et le photomètre (4) constituent une seule unité intégrée, que de plus, chaque composant sauf le support d'informations (3) et l'unité de développement des images (8) sont des dispositifs à semi-conducteurs et que la visualisation de l'image, l'exposition et le processus de développement de l'image sont tous effectués simultanément en un processus continu grâce à l'utilisation du mouvement mécanique du mécanisme de développement.

2. Appareil selon la revendication 1, caractérisé par le fait que ladite unité intégrée comprend aussi l'électronique de commande (5), l'électronique de déclenchement (6) et l'électronique d'interface (7).

3. Appareil selon la revendication 1, caractérisé en ce que lesdistes électronique de commandes (5), électronique de déclenchement (6) et électronique d'interface (7) sont toutes incorporées dans une unité distincte.

4. Appareil selon la revendication 1, caractérisé par le fait que ladite unité intégrée est constituée de couches superposées formant un masque supérieur de visualisation (10), un support supérieur de visualisation (12), un matériau de visualisation actif par un procédé électro-optique (14), un support de visualisation inférieur (13), un masque inférieur de visualisation (11), un élément de couplage (100), un masque supérieur d'obturateur (20), un support supérieur d'obturateur (11), un matériau obturateur actif par un procédé électro-optique (24), un support inférieur d'obturateur (23), un masque inférieur d'obturateur (21) et un photomètre ou contrôleur (4) couvrant partiellement ou totalement le trajet lumineux.

5. Appareil selon la revendication 4, caractérisé par le fait que le matériau de visualisation et le matériau de l'obturateur sont constitués par des cristaux liquides.

6. Appareil selon la revendication 4, caractérisé par le fait que le matériau de visualisation est constitué d'un cristal électroluminescent et par le fait que la matériau obturateur est un cristal liquide.

7. Appareil selon la revendication 4, caractérisé par le fait que ledit support inférieur de visualisation, ledit support supérieur d'obturateur, ainsi que l'élément de couplage intercalé sont remplacés par un seul support commun (17), et par le fait que le masque inférieur de visualisation ainsi que le masque supérieur de l'obturateur sont respectivement étalés sur la surface supérieur et la surface inférieure de ce support commun.

8. Appareil selon la revendication 1, caractérisé par le fait que le support commun de visualisation/obturateur est inclus dans ladite unité intégrée exécutant à la fois les fonctions d'écran de visualisation et d'obturateur;

que ladite unité intégrée comprend aussi des couches de filtre rouge (43), de filtre bleu (44) et de filtre vert (45), disposées perpendiculairement à la direction du mouvement du support photosensible, avancé pas à pas et exposé ligne à ligne et que lesdits filtres sont parallèles entre eux dans le même plan;

que le photomètre est également divisé en trois sections (40, 41, 42) constituant respectivement des filtres rouge bleu et vert; de sorte qu'en séparant les trois couleurs primaires, le dispositif est capable d'enregistrer aussi des informations en couleur.

9. Appareil selon la revendication 1, caractérisé par le fait qu'un programme remplaçant la fonction de l'obturateur en commutant l'écran en service uniquement pendant la durée d'exposition est chargé dans la mémoire de la source d'information interfacée.

10. Appareil selon la revendication 9, caractérisé par le fait qu'un ordinateur est intégré pour effectuer une conversion de code sur des signaux provenant du dispositif de visualisation d'un équipement extérieur devant être reçus par le dispositif de l'invention, et pour faciliter l'enregistrement et la duplication de toutes les informations se produisant dans cet ordinateur, en cas de besoin.

11. Appareil selon la revendication 1, caractérisé par le fait que ladite électronique d'interface (7) comprend des circuits propres de façon que le dispositif soit capable d'enregistrer et de reproduire automatiquement toute image sélectionnée parmi une série d'images apparaissant sur ledit dispositif de visualisation ou sur l'écran d'un dispositif de visualisation commerciale associé.

Fig. 1

Fig. 2

Fig. 3

Fig. 4

Fig. 5